# EUROPÄISCHE PATENTSCHRIFT

(11) **EP 1 135 634 B1**
(45) Veröffentlichungstag und Bekanntmachung des Hinweises auf die Patenterteilung: **31.07.2002**
(21) Anmeldenummer: 99959333.8
(22) Anmeldetag: 25.11.1999
(51) Int. Cl.: F16H 61/00, B60R 16/00

(54) **ANORDNUNG EINER ELEKTRONIKEINHEIT UND EINER HYDRAULIKEINHEIT EINES STEUERGERÄTES FÜR EIN AUTOMATGETRIEBE EINES KRAFTFAHRZEUGES**
ASSEMBLY FOR AN ELECTRONIC ELEMENT AND A HYDRAULIC ELEMENT OF A CONTROL DEVICE FOR THE AUTOMATIC TRANSMISSION OF A MOTOR VEHICLE
CONFIGURATION DE L'UNITE ELECTRONIQUE ET DE L'UNITE HYDRAULIQUE D'UN APPAREIL DE COMMANDE POUR LA BOITE DE VITESSES AUTOMATIQUE D'UNE AUTOMOBILE

(30) Priorität: 01.12.1998 DE 19855319
(43) Veröffentlichungstag der Anmeldung: 26.09.2001
(73) Patentinhaber: ZF Batavia, L.L.C., Batavia, OH 45103 (US)
(72) Erfinder: SOMMER, Stefan, D-88348 Saulgau (DE); FESSLER, Bernd, D-88079 Kressbronn (DE); KÖNIG, Hubert, D-88069 Tettnang (DE)
(74) Vertreter: Zietlow, Karl-Peter
(86) Internationale Anmeldenummer: EP9909110
(87) Internationale Veröffentlichungsnummer: WO0032966

(56) Entgegenhaltungen:
- EP-A2- 0 758 719
- WO-A1-95/30102
- DE-A1- 19 604 948
- US-A- 5 611 372
- US-A- 5 709 134

## Beschreibung

Die Erfindung betrifft eine Anordnung einer Elektronikmodule umfassenden Elektronikeinheit und einer Hydraulikeinheit eines Steuergerätes für ein Automatgetriebe eines Kraftfahrzeuges mit einem teilweise mit Öl gefüllten Getriebegehäuse, wobei das elektro-hydraulische Steuergerät zumindest teilweise von Öl umgeben in dem Getriebegehäuse angeordnet ist.

Aus der Praxis ist es bekannt, ein Steuergerät für ein Automatgetriebe außerhalb des Getriebegehäuses anzuordnen und in dem Getriebegehäuse angeordnete Steuermittel wie Aktoren oder Stellglieder über Leitungen mit dem Steuergerät zu verbinden.

Diese Lösung ist jedoch dahingehend nachteilhaft, daß eine lange Kabelführung zwischen Steuermitteln und Steuergerät erforderlich ist und für das außerhalb des Getriebegehäuses angeordnete Steuergerät zusätzlich Raum benötigt wird.

In der US 4,271,728 und in der EP 0 697 080 B1 wird eine Lösung vorgeschlagen, welche das Problem des zusätzlichen Raumbedarfs löst, indem das Steuergerät in dem Ölsumpf eines Getriebes angeordnet ist, wobei die elektrischen Verbindungen zwischen der Steuerelektronik und den Steuermitteln gemäß der EP 0 697 080 B1 als starre Drähte ausgebildet sind.

Diese bekannten Steuergeräte sind jedoch in Einbaulage schwer zugänglich und hinsichtlich der Anordnung der Komponenten des Steuergerätes bei Berücksichtigung des sehr beschränkten Bauraumes nicht zufriedenstellend.

Des weiteren ist bei diesen bekannten Getriebesteuerungen die Kühlung der Wärme produzierenden Steuerelektronik unzureichend. Die vorgeschlagene Kühlung der Steuerelektronik durch bloßes umströmen der Elektronikeinheit mit Getriebeöl erweist sich nämlich in Betriebssituationen mit hohen Getriebeöltemperaturen als problematisch. Insbesondere bei modernen Automatgetrieben kann das Getriebeöl Temperaturen erreichen, bei denen es die von den Elektronikkomponenten erzeugte Wärmemenge nicht mehr aufnehmen kann. Die Folge sind eine Überhitzung der Elektronikkomponenten und Störungen in der Getriebesteuerung, welche bis zu einem kompletten Ausfall der Steuerelektronik reichen können.

Weiterhin ist aus der DE 196 04 948 A1 eine gattungsbildende Steuerungsanordnung für ein CVT bekannt, bei dem die elektronische Getriebesteuerung unmittelbar an die hydraulische Getriebesteuerung angeflanscht ist und beide Steuereinheiten senkrecht stehend hinter dem Variator des CVT, also senkrecht zur Antriebswelle, und zumindest teilweise im Öl angeordnet sind. Die hydraulische Steuereinheit weist zwei Ventilgehäuse auf, wobei das Ventilgehäuse, auf dem die elektronische Steuereinheit angeordnet ist, auf seiner Unterseite Ölleitrippen aufweist, so daß die elektronische Steuereinheit über eine im Detail nicht offenbarte Ölführung kühlbar ist.

Es ist Aufgabe der vorliegenden Erfindung, eine Anordnung einer Elektronikmodule umfassenden Elektronikeinheit und einer Hydraulikeinheit eines Steuergerätes für ein Automatgetriebe eines Kraftfahrzeuges zu schaffen, wobei das Steuergerät raumsparend in einem Getriebegehäuse, von Getriebeöl umgeben angeordnet ist, im Einbauzustand leicht zugänglich ist, und wobei die Elektronikmodule des Steuergerätes zuverlässig vor einer Überhitzung geschützt werden

Diese Aufgabe wird durch eine die Merkmale des Patentanspruches 1 aufweisende Anordnung gelöst.

Die erfindungsgemäße Anordnung der Elektronikeinheit und der Hydraulikeinheit des Steuergerätes und die Kühlung der Elektronikeinheit ermöglichen es, die Vorteile einer Anordnung des Steuergerätes im Ölsumpf des Getriebegehäuses mit einem entsprechend geringen Raumbedarf und kurzen Verbindungen zu den Stellgliedern zu nützen, wobei die Elektronikeinheit und insbesondere der Getriebezentralstecker zuverlässig abgedichtet sind.

Des weiteren hat die erfindungsgemäße Anordnung den Vorteil, daß das Steuergerät einen funktionsgerechten und übersichtlichen Aufbau aufweist, leicht zu montieren ist und auch in Einbauzustand im Fahrzeug gut zugänglich ist.

Durch die erfindungsgemäße Lösung ist auch sichergestellt, daß die Verlustleistung von Elektronikmodulen zuverlässig abgeführt wird und deren Betriebstemperatur stets so niedrig gehalten wird, daß eine Störung durch eine örtliche Überhitzung auf einer Elektroplatine vermieden wird.

Dadurch wird nicht nur die Zuverlässigkeit der Getriebesteuerung erhöht, sondern auch die Lebensdauer der Elektronikkomponenten verlängert.

Weitere Vorteile und vorteilhafte Ausgestaltungen der Erfindung ergeben sich aus den Unteransprüchen und dem nachfolgend anhand der Zeichnung prinzipmäßig beschriebenen Ausführungsbeispiel.

Es zeigt:
- Fig. 1: eine schematisierte Darstellung eines Teiles eines Automatgetriebes mit einem in einem Ölsumpf angeordneten Steuergerät einer Getriebesteuerung; und
- Fig. 2: eine Draufsicht auf eine Hydraulikeinheit des Steuergerätes gemäß Fig. 1 nach Entfernen einer darauf angeordneten Elektronikeinheit.

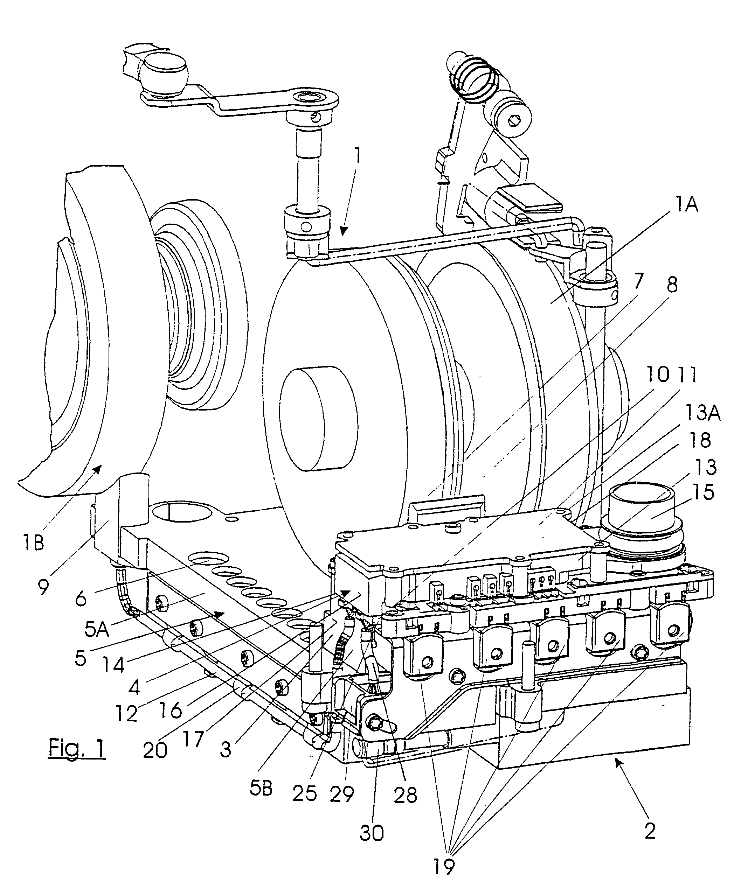

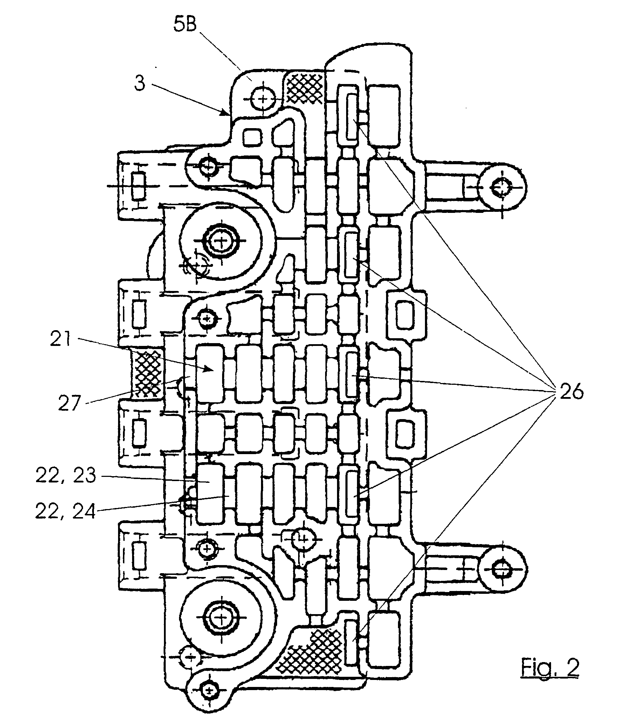

Bezug nehmend auf die Figuren 1 und 2 ist schematisch ein Teil eines Automatgetriebes für ein Kraftfahrzeug mit einem Variator 1 und einem Steuergerät 2 einer elektrohydraulischen Getriebesteuerung ersichtlich, welche in einem nicht näher dargestellten Getriebegehäuse angeordnet sind.

Das Steuergerät 2, welches zur Übertragung von Signalen mit nicht näher bezeichneten elektrischen, mechanischen und hydraulischen Steuermitteln des Getriebes verbunden ist, weist eine Hydraulikeinheit 3 und eine Elektronikmodule (nicht ersichtlich) umfassende Elektronikeinheit 4 auf.

In dem vorliegenden Ausführungsbeispiel ist das Steuergerät 2 in dem Getriebegehäuse vollständig von Öl umgeben.

Die Hydraulikeinheit 3 weist ein Ventilgehäuse 5 mit einem ersten Gehäuseteil 5A und einem zweiten Gehäuseteil 5B auf, welches mehrere Hydraulikventile 6 und mit der Elektronikeinheit 4 verbundene Drehzahlsensoren 7, 8, 9 und Drucksensoren 10, 11 aufnimmt.

Drei Drehzahlsensoren 7, 8 und 9, welche als Hall-Sensoren ausgebildet sind, sind über elektrische Leitungen 12 mit der Elektronikeinheit 4 verbunden.

Der erste Gehäuseteil 5A ist annähernd quaderförmig ausgebildet und in Einbaulage in einem Fahrzeug im wesentlichen unter dem ersten Kegelscheibensatz 1A des Variators 1 angeordnet.

Der zweite Gehäuseteil 5B erstreckt sich von einem seitlichen Bereich des ersten Gehäuseteils 5A, der nicht unter dem ersten Kegelscheibensatz 1A liegt, nach oben, so daß er in Einbaulage seitlich des ersten Kegelscheibensatzes 1A liegt. Auf dem zweiten Gehäuseteil 5B ist die Elektronikeinheit 4 angeordnet, welche eine im wesentlichen parallel zu einer Grundebene des Ventilgehäuses 5 angeordnete Leiterplatte aufweist, welche in den Figuren 1 bis 3 von einem Gehäuse 13 der Elektronikeinheit 4 verdeckt ist, deren Lage jedoch mit dem Bezugszeichen 14 angedeutet ist.

In einem Bereich auf dem zweiten Gehäuseteil 5B des Ventilgehäuses, welcher von dem die Leiterplatte 14 umgebenden Gehäuse 13 nicht eingenommen wird, befindet sich eine Aufnahme 15 für einen Getriebezentralstecker (nicht dargestellt), in die der Getriebezentralstecker gegenüber dem Getriebeöl dichtend einsteckbar ist.

Das Gehäuse 13 der Elektronikeinheit 4, welches die Leiterplatte 14 dichtend aufnimmt, ist im wesentlichen quaderförmig ausgebildet und nach oben durch einen Deckel 13A geschlossen, wobei seine eine Stirnseite 16 annähernd mit der Stirnseite 17 des darunter liegenden zweiten Gehäuseteiles 5B des Ventilgehäuses 5 und mit einer Seitenwand des ersten Gehäuseteiles 5A abschließt und an dessen zweite Stirnseite 18 die Aufnahme 15 für den Getriebezentralstekker grenzt.

An dem zweiten Gehäuseteil 5B des Ventilgehäuses 5 sind in einem an die Elektronikeinheit 4 grenzenden Bereich mehrere Druckregler 19 in einer Linie entlang der dem Variator 1 abgewandten Längsseite der Elektronikeinheit 4 angeordnet.

Des weiteren sind an dem zweiten Gehäuseteil 5B des Ventilgehäuses 5 zwei Drucksensoren 10, 11 vorgesehen. Der Drehzahlsensor 7 zur Aufnahme der Turbinendrehzahl N_T und der Sensor 8 zur Aufnahme der Drehzahl N_S1 des ersten Kegelscheibensatzes 1A sind an der dem Variator 1 zugewandten Längsseite des Gehäuses 13 der Elektronikeinheit 4 und des zweiten Gehäuseteiles 5B des Ventilgehäuses 5 angeordnet.

Der Sensor 9 zur Aufnahme der Abtriebsdrehzahl N_AB ist an der Seite des ersten Gehäuseteiles 5A des Ventilgehäuses 5 angeordnet, welche der Seite mit dem zweiten Gehäuseteil 5B und der Elektronikeinheit 4 gegenüberliegt. Zu der Elektronikeinheit 4 führt als elektrische Leitung ein Kabel 12, welches an Halterungen 20 seitlich entlang der Seite des ersten Gehäuseteiles 5A, an welche die Stirnseiten 16, 17 des zweiten Gehäuseteiles 5B und der Elektronikeinheit 4 grenzen, geführt ist. Entlang dieser Seite des ersten Gehäuseteiles 5A des Ventilgehäuses 5 sind auf dessen Oberseite auch mehrere der Hydraulikventile 6 angeordnet.

Wie insbesondere in Fig. 2 ersichtlich ist, ist in einem Übergangsbereich zwischen dem zweiten Gehäuseteil 5B des Ventilgehäuses 5 und der Elektronikeinheit 4 in dem zweiten Gehäuseteil 5B eine Kühleinrichtung 21 vorgesehen, mittels der die Elektronikeinheit 4 mit einem definierten Volumenstrom eines Kühlmittels mit einer Temperatur ϑ_c, welche kleiner als die maximal vorherrschende Getriebeöltemperatur ϑ_ G ist, angeströmt wird. Damit wird die Betriebstemperatur des Steuergerätes 2 und insbesondere der Elektronikeinheit 4 auch bei einer hohen Getriebeöltemperatur ϑ_ G auf einem niedrigen Niveau gehalten.

Die Kühleinrichtung 21 ist mit Kühlkanälen 22, welche an die Elektronikeinheit 4 grenzen, ausgebildet. Dabei weisen die Kühlkanäle 22 im Bereich von Elektronikmodulen, welche Leistungsbauelemente darstellen und eine entsprechend große Wärmemenge erzeugen, eine größere Querschnittsfläche und damit eine größere Wärmeaustauschfläche auf. Die Kühlkanäle 22 sind in dem Ventilgehäuse 5 als eine Art Labyrinth mit beckenartigen Erweiterungen 23 und schmalen Verbindungsnuten 24 ausgeformt.

Durch die Erweiterungen 23 und die Verbindungsnuten 24 wird die Strömungsgeschwindigkeit des Kühlmittels und damit die Wärmeaustauschzeit an unterschiedlichen Stellen in der Kühleinrichtung 21 in Abhängigkeit von der Wärmeerzeugung der Elektronikmodule der Elektronikeinheit 4 auf definierte Weise variiert.

Die Elektronikeinheit 4 weist zur Hydraulikeinheit 3 hin eine Grundplatte 25 aus Aluminium auf, auf der die Leiterplatte 14 angeordnet ist.

Die Fig. 2, welche eine Draufsicht auf die Hydraulikeinheit 3 mit den Kühlkanälen 22 ohne die Elektronikeinheit 4 und ihrer Grundplatte 25 ist, zeigt, daß die Kühlkanäle 22 zu der Grundplatte 25 hin offen ausgebildet sind. Dadurch wird die Grundplatte 25 bei größtmöglicher Wärmeaustauschfläche direkt mit Kühlmittel überströmt.

Als Kühlmittel wird Getriebeöl verwendet, welches vor der Zuführung an die Elektronikeinheit 4 in einem Getriebekühler (nicht dargestellt) gekühlt wird. Der Volumenstrom des Kühlmittels ist derart vorgesehen, daß das Kühlmittel von der Getriebekühlung kommend durch Eintrittsöffnungen 26 im Bereich der Druckreglern 19 in die Hydraulikeinheit 3 eingespeist wird. Von den Eintrittsöffnungen 26 tritt das Kühlmittel in den Kühlkanälen 22 nach oben und überströmt die Grundplatte 25. Danach wird es über Austrittsöffnungen 27 in den Ölsumpf abgeleitet.

Wie in Fig. 1 ersichtlich ist, ist ein mit der Elektronikeinheit 4 über elektrische Leitungen 28 verbundener Positionssensor 29 direkt an und unter dem zweiten Gehäuseteil 5B des Ventilgehäuses 5 befestigt und zu einem darunter linear geführten Wählschieber 30 derart angeordnet, daß er dessen Verschiebeweg, welcher in Längsrichtung der Elektronikeinheit 4 und des zweiten Gehäuseteiles 5B des Ventilgehäuses 5 verläuft, abgreift.

Die Ausgestaltung des Positionssensor 29, der über eine entsprechende Sensoreinrichtung den Verschiebeweg des Wählschiebers 30 direkt abgreift, bringt den Vorteil, daß ein direkter konstruktiver Kontakt zwischen der mechanischhydraulischen Stellung des Wählschiebers 30 und dem Positionssensor 29 ohne störende Zwischenglieder besteht. Dadurch wird eine kurze Toleranzkette und Toleranzminimierung erreicht, die eine genaue Erfassung der Stellung des hydraulischen Wählschiebers in Bezug auf hydraulische Öffnungsquerschnitte und eine präzise elektronische Signalverarbeitung und Signalausgabe an die elektronische Getriebesteuerung ermöglicht.

Es ist somit sichergestellt, daß bei mechanischhydraulischer Einstellung einer definierten Getriebeschaltstellung, wie z.B. P für Parken, R für Rückwärtsfahrt, N für Neutralstellung, D und L für Vorwärtsfahrt, von dem Positionssensor 29 das dieser Getriebschaltstellung zugeordnete Signal ausgegeben wird, wobei eine kodierte Signalausgabe erheblich zur Vermeidung von Schaltfehlern beiträgt.

Der Positionssensor 29 ist als Hall-Sensor ausgebildet. Diese elektronische, nach dem Prinzip eines berührungslosen Schalters arbeitende Ausführung des Positionssensors 29 eignet sich in sehr vorteilhafter Weise für eine exakte Positionserfassung.

Alternativ hierzu kann der Positionssensor 29 in einer weiteren, nicht dargestellten Ausführung aber auch mit einem Schleif- und/oder Hubkontakt-Sensor ausgebildet sein.

In jedem Fall wird die Toleranzkette durch die Befestigung des Positionssensors 29 direkt an der Hydraulikeinheit 3 in besonders vorteilhafter Weise verkürzt.

### Bezugszeichen

- 1: Variator
- 1A: Kegelscheibensatz
- 1B: Kegelscheibensatz
- 2: Steuergerät
- 3: Hydraulikeinheit
- 4: Elektronikeinheit
- 5: Ventilgehäuse
- 5A: erster Gehäuseteil des Ventilgehäuses
- 5B: zweiter Gehäuseteil des Ventilgehäuses
- 6: Hydraulikventil
- 7: Drehzahlsensor zur Aufnahme einer Turbinendrehzahl N_T
- 8: Drehzahlsensor zur Aufnahme einer Drehzahl N_S1 eines ersten Kegelscheibensatzes
- 9: Drehzahlsensor zur Aufnahme einer Abtriebsdrehzahl N_AB
- 10: Drucksensor
- 11: Drucksensor
- 12: elektrische Leitung, Kabel
- 13: Gehäuse der Elektronikeinheit
- 13A: Deckel
- 14: Leiterplatte
- 15: Aufnahme für einen Getriebezentralstecker
- 16: Stirnseite des Gehäuses der Elektronikeinheit
- 17: Stirnseite des zweiten Gehäuseteiles des Ventilgehäuses
- 18: Stirnseite des Gehäuses der Elektronikeinheit
- 19: Druckregler
- 20: Halterung
- 21: Kühleinrichtung
- 22: Kühlkanal
- 23: Erweiterung
- 24: Verbindungsnut
- 25: Grundplatte
- 26: Eintrittsöffnung
- 27: Austrittsöffnung
- 28: elektrische Leitung
- 29: Positionssensor
- 30: Wählschieber

## Patentansprüche

1. Anordnung einer Elektronikmodule umfassenden Elektronikeinheit (4) und einer Hydraulikeinheit (3) eines Steuergerätes (2) für ein stübenloses Automatgetriebe eines Kraftfahrzeuges mit einem teilweise mit Öl gefüllten Getriebegehäuse, wobei das Steuergerät (2) zumindest teilweise von Öl umgeben in dem Getriebegehäuse angeordnet ist, die Hydraulikeinheit (3) ein Ventilgehäuse (5) aufweist, an dem Hydraulikventile (6), Drehzahlsensoren (7, 8, 9) und Drucksensoren (10, 11) vorgesehen sind, das Ventilgehäuse (5) einen ersten Gehäuseteil (5A) und einen zweiten Gehäuseteil (5B) aufweist, auf dem zweiten Gehäuseteil (5B) die Elektronikeinheit (4) mit einer im wesentlichen parallel zu einer Grundebene des Ventilgehäuses (5) angeordneten Leiterplatte (14) und eine Aufnahme (15) für einen Getriebezentralstecker angeordnet sind, der zweite Gehäuseteil (5B) mehrere Druckregler (19), eine Kühleinrichtung (21), mittels der wenigstens ein Teil der Elektronikeinheit (4) kühlbar ist, und einen Positionssensor (29) zur Erkennung einer Position eines direkt an der Hydraulikeinheit (3) angeordneten Wählschiebers (30) aufweist, **dadurch gekennzeichnet, daß** der erste Gehäuseteil (5A) wenigstens annähernd quaderförmig ausgebildet und im wesentlichen unter einem Kegelscheibensatz (1A) eines Variators (1) angeordnet ist, daß der zweite Gehäuseteil (5B) sich von einem seitlichen Bereich des ersten Gehäuseteils (5A) nach oben seitlich des Kegelscheibensatzes (1A) erstreckt, daß die Elektronikeinheit (4) ein die Leiterplatte (14) abdichtendes und nach oben durch einen Dekkel (13A) geschlossenes, im wesentlichen quaderförmiges Gehäuse (13) aufweist, dessen eine Stirnseite (16) wenigstens annähernd mit der Stirnseite (17) des darunter liegenden zweiten Gehäuseteiles (5B) des Ventilgehäuses (5) und mit einer Seitenwand des ersten Gehäuseteiles (5A) abschließt und an dessen zweite Stirnseite (18) die Aufnahme (15) für den Getriebezentralstecker grenzt, und daß die Druckregler (19) wenigstens annähernd in einer Linie entlang der dem Variator (1) abgewandten Längsseite der Elektronikeinheit (4) angeordnet sind.

2. Anordnung nach Anspruch 1, **dadurch gekennzeichnet, daß** die Drucksensoren (10, 11) im Bereich des zweiten Gehäuseteiles (5B) des Ventilgehäuses (5) vorgesehen sind.

3. Anordnung nach Anspruch 1 oder 2, **dadurch gekennzeichnet, daß** als Drehzahlsensoren (7, 8, 9) ein Sensor (7) zur Aufnahme einer Turbinendrehzahl N_T, ein Sensor (8) zur Aufnahme einer Drehzahl N_S1 des ersten Kegelscheibensatzes (1A) des Variators (1) und ein Sensor (9) zur Aufnahme einer Abtriebsdrehzahl N_AB vorgesehen sind, welche über elektrische Leitungen (12) mit der Elektronikeinheit (4) verbunden sind, daß die Drehzahlsensoren (7, 8, 9) als Hall-Sensoren ausgebildet sind, wobei der Sensor (7) zur Aufnahme der Turbinendrehzahl N_T und der Sensor (8) zur Aufnahme der Drehzahl N_S1 des Kegelscheibensatzes (1A) an der dem Variator (1) zugewandten Längsseite des Gehäuses (13) der Elektronikeinheit (4) angeordnet sind, und wobei der Sensor (9) zur Aufnahme der Abtriebsdrehzahl N_AB an der Seite des ersten Gehäuseteiles (5A) des Ventilgehäuses (5) angeordnet ist, welche der Seite mit dem zweiten Gehäuseteil (5B) und der Elektronikeinheit (4) gegenüberliegt.

4. Anordnung nach Anspruch 3, **dadurch gekennzeichnet, daß** die elektrische Leitung (12) von dem Sensor (9) zur Aufnahme der Abtriebsdrehzahl (N_AB) zu der Elektronikeinheit (4) als Kabel ausgeführt ist, welches an Halterungen (20) seitlich entlang dem ersten Gehäuseteil (5A) geführt ist.

5. Anordnung nach einem der Ansprüche 1 bis 4, **dadurch gekennzeichnet, daß** in dem ersten Gehäuseteil (5A) des Ventilgehäuses (5) mehrere der Hydraulikventile (6) entlang der Seite, an welche die Stirnseiten (16, 17) des zweiten Gehäuseteiles (5B) und der Elektronikeinheit (4) grenzen, angeordnet sind.

6. Anordnung nach einem der Ansprüche 1 bis 5, **dadurch gekennzeichnet, daß** in einem Übergangsbereich zwischen dem zweiten Gehäuseteil (5B) des Ventilgehäuses (5) und der Elektronikeinheit (4) in dem zweiten Gehäuseteil (5B) die Kühleinrichtung (21) mit Kühlkanälen (22), welche an die Elektronikeinheit (4) grenzen, ausgebildet ist.

7. Anordnung nach Anspruch 6, **dadurch gekennzeichnet, daß** die Kühlkanäle (22) im Bereich von Leistungsbauelementen darstellenden Elektronikmodulen die größte Wärmeaustauschfläche aufweisen.

8. Anordnung nach Anspruch 6 oder 7, **dadurch gekennzeichnet, daß** die Kühlkanäle (22) zu einer Grundplatte (25) der Elektronikeinheit (4), auf der die Elektronikmodule angeordnet sind, offen ausgebildet sind.

9. Anordnung nach Anspruch 8, **dadurch gekennzeichnet, daß** die Kühlkanäle (22) in der Hydraulikeinheit (3) als Labyrinth ausgebildet sind, wobei das Kühlmittel von einer Getriebekühlung kommend durch Eintrittsöffnungen (26) im Bereich der Druckregler (19) in die Hydraulikeinheit (3) eintritt, die Grundplatte (25) überströmt und über Austrittsöffnungen (27) in den Ölsumpf abgeleitet ist.

10. Anordnung nach einem der Ansprüche 1 bis 9, **dadurch gekennzeichnet, daß** der mit der Elektronikeinheit (4) über elektrische Leitungen (28) verbundene Positionssensor (29) zu dem linear geführten Wählschieber (30) derart angeordnet ist, daß er dessen Verschiebeweg, welcher in Längsrichtung der Elektronikeinheit (4) und des zweiten Gehäuseteiles (5B) des Ventilgehäuses (5) verläuft, direkt abgreift.

11. Anordnung nach Anspruch 10, **dadurch gekennzeichnet, daß** der Positionssensor (29) als Hall-Sensor ausgebildet ist.

## Claims

1. Arrangement of a modular electronic unit (4) and a hydraulic unit (3) of a control device (2) for a continuously variable automatic transmission of a motor vehicle with a partly oil-filled transmission housing, with the partially oil-surrounded control device (2) being arranged in the transmission housing, the hydraulic unit (3) having a valve housing (5) designed for hydraulic valves (6), speed sensors (7, 8, 9) and pressure sensors (10, 11), with the valve housing (5) having a first housing sector (5A) and a second housing sector (5B); the second housing sector (5B) having the electronic unit (4) with a PCB (14) arranged essentially parallel to the ground plane of the valve housing (5) and an input (15) for a central transmission plug on it; the second housing sector (5B) featuring several pressure regulators (19), a cooling installation (21), by means of which at least part of the electronic unit (4) can be cooled, and a position sensor (29) for the purpose of recognizing the position of a selector valve (30) arranged direct on the hydraulic unit (3),
**characterized**
**in that** the first housing sector (5A) has at least a semi-cuboidal shape and is essentially arranged beneath a cone gear set (1A) of a variator (1), the second housing sector (5B) is arranged alongside the first housing sector (5A) and stretches upward alongside the cone gear set (1A), the electronic unit (4) has a largely cuboidal housing (13), which seals off the PCB (14) and is closed by a cover (13A) on top, and the front face (16) of which is at least approximately flat against the front face (17) of the lower second housing sector (5B) of the valve housing (5) and flat against a side wall of the first housing sector (5A), and with the input (15) for the central transmission plug adjoining its second front face (18), and with the pressure regulators being arranged at least roughly in a single line along the long side of the electronic unit (4) not facing the variator (1).

2. Arrangement in accordance with claim 1,
**characterized**
**in that** the pressure sensors (10, 11) are arranged in the area of the second housing sector (5B) of the valve housing (5).

3. Arrangement in accordance with claim 1 or 2,
**characterized**
**in that** speed sensors (7, 8, 9) are provided for in the form of a sensor (7) to record a turbine speed N_T, a sensor (8) to record a speed N_S1 of the first cone gear set (1A) of the variator (1) and a sensor (9) to record an output speed N_AB, all of which are linked to the electronic unit (4) through electrical wires (12); that the speed sensors (7, 8, 9) are designed as Hall sensors, with the sensor (7) for the turbine speed N_T and the sensor (8) for the speed N_S1 of the cone gear set (1A) being arranged on the long side of the housing (13) of the electronic unit (4) facing the variator (1), and with the sensor (9) for the output speed N_AB being arranged on the side of the first housing section (5A) of the valve housing (5) facing the side with the second housing sector (5B) and the electronic unit (4).

4. Arrangement in accordance with claim 3,
**characterized**
**in that** the electrical line (12) from the sensor (9) for the output speed (N_{_}AB) to the electronic unit (4) is a cable guided by fixtures (20) alongside the first housing sector (5A).

5. Arrangement in accordance with one of the claims 1 to 4,
**characterized**
**in that** several hydraulic valves (6) are arranged in the first housing section (5A) of the valve housing (5) along the side on which the front faces (16, 17) of the second housing section (5B) and of the electronic unit (4) adjoin.

6. Arrangement in accordance with one of the claims 1 to 5,
**characterized**
**in that** the cooling installation (21) with cooling channels (22), which are adjacent to the electronic unit (49), is arranged in a transition area between the second housing section (5B) of the valve housing (5) and the electronic unit (4) in the second housing section (5B).

7. Arrangement in accordance with claim 6,
**characterized**
**in that** the cooling channels (22) feature the largest heat exchange surface in the sector for electronic modules representing power components.

8. Arrangement in accordance with claim 6 or 7,
**characterized**
**in that** the cooling channels (22) on the base plate (25) of the electronic unit (4), on which the electronics modules are arranged, are open.

9. Arrangement in accordance with claim 8,
**characterized**
**in that** the cooling channels (22) in the hydraulic unit (3) are designed as a labyrinth. Following transmission cooling, the coolant reaches the hydraulic unit (3) through inlets (26) in the area of the pressure regulators (19), flows over the base plate (25) and is discharged into the oil sump through outlets (27).

10. Arrangement in accordance with one of the claims 1 to 9,
**characterized**
**in that** the position sensor (29), which is linked to the electronic unit (4) through electrical wires (28), is arranged in relation to the linear selector valve (30) to allow direct pickup of its displacement, which is in lengthwise direction of the electronic unit (4) and of the second housing sector (5B) of the valve housing (5).

11. Arrangement in accordance with claim 10,
**characterized**
**in that** the position sensor (29) is a Hall sensor.

## Revendications

1. Ensemble composé d'une unité électronique (4) comprenant des modules électroniques et d'une unité hydraulique (3) d'un bloc hydraulique (2) pour une boîte automatique à variation continue d'un véhicule automobile pourvue d'un carter de boîte de vitesses rempli partiellement d'huile, sachant que le bloc hydraulique (2) est disposé dans le carter de la boîte de vitesses de façon à être au moins partiellement baigné d'huile, sachant que l'unité hydraulique (3) comporte un carter de soupapes (5) sur lequel sont prévus des valves hydrauliques (6), des capteurs de régime (7, 8, 9) et des capteurs de pression (10, 11), sachant que le carter de soupapes (5) comporte un premier demi-carter (5A) et un deuxième demi-carter (5B), sachant que sur le deuxième demi-carter (5B) est disposée l'unité électronique (4) dotée d'une carte imprimée (14) et d'un logement (15) pour une prise centrale de boîte de vitesses étant disposés essentiellement en parallèle par rapport à un plan de base du carter de soupapes (5), sachant que le deuxième demi-carter (5B) comporte plusieurs modulateurs de pression (19), un équipement de refroidissement (21) - au moyen duquel peut être refroidi au moins une partie de l'unité électronique (4) - et un capteur de position (29) pour détecter une position d'un tiroir de sélection (30) disposé directement sur l'unité hydraulique (3), **caractérisé en ce que** le premier demi-carter (5A) et conçu au moins en forme quasi-parallélépipède et **en ce qu'**il est disposé essentiellement en-dessous d'un jeu de disques coniques (1A) d'un variateur (1), **en ce que** le deuxième demi-carter (5B) se projette - à partir d'une zone latérale du premier demi-carter (5A) - vers le haut et latéralement par rapport au jeu de disques coniques (1A), **en ce que** l'unité électronique (4) comporte un carter (13) essentiellement conçu en forme parallélépipède couvrant la carte imprimée (14) et étant fermé vers le haut par un couvercle (13A) dont une de ses faces frontales (16) affleure au moins et approximativement sur la face frontale (17) du deuxième carter (5B) du carter de soupapes (5) se trouvant juste en-dessous du carter (13) et sur une paroi latérale du premier demi-carter (5A) et **en ce que** le logement (15) de la prise centrale de la boîte de vitesses est contigu à la deuxième face frontale (18) du carter (13), et **en ce que** les modulateurs de pression (19) sont disposés au moins approximativement en ligne droite le long du coté longitudinal de l'unité électronique (4) opposé au variateur (1).

2. Ensemble selon la revendication 1, **caractérisé en ce que** les capteurs de pression (10, 11) sont prévus au niveau du deuxième demi-carter (5B) du carter de soupapes (5).

3. Ensemble selon les revendications 1 ou 2, **caractérisé en ce que** en tant que capteurs de régime (7, 8, 9) sont prévus un capteur (7) destiné à l'enregistrement du régime de turbine N_Z, un capteur (8) destiné à l'enregistrement d'un régime N-S1 du premier jeu de disques coniques (1A) du variateur (1) et un capteur (9) destiné à l'enregistrement du régime de sortie N_AB étant tous liés par l'intermédiaire de lignes électriques (12) à l'unité électronique (4), **en ce que** les capteurs de régime (7, 8, 9) sont conçus comme capteurs à effet Hall, sachant que le capteur (7) destiné à l'enregistrement du régime de turbine N_T et le capteur (8) destiné à l'enregistrement du régime N-S1 du jeu de disques coniques (1A) sont disposés du coté du carter (13) de l'unité électronique (4) tourné vers le variateur (1), et sachant que le capteur (9) destiné à l'enregistrement du régime de sortie N_AB est disposé du coté du premier demi-carter (5A) du carter de soupapes (5) étant opposé au coté comportant le deuxième demi-carter (5B) et l'unité électronique (4).

4. Ensemble selon la revendication 3, **caractérisé en ce que** la ligne électrique (12) du capteur (9) - destiné à l'enregistrement du régime de sortie (N_AB) - vers l'unité électronique est conçue comme câble qui est cheminé à l'aide d'attaches (20) latéralement le long du premier demi-carter (5A).

5. Ensemble selon une des revendications 1 à 4, **caractérisé en ce que** dans le premier demi-carter (5A) du carter de soupapes (5) sont disposées plusieurs des valves hydrauliques (6) le long du coté auquel sont contiguës les faces frontales (16, 17) du deuxième demi-carter (5B) et de l'unité électronique (4).

6. Ensemble selon une des revendications 1 à 5, **caractérisé en ce que** dans une zone de transition entre le deuxième demi-carter (5B) du carter de soupapes (5) et de l'unité électronique (4) dans le deuxiéme demi-carter (5B) est réalisé l'équipement de refroidissement (21) doté de canaux de refroidissement (22) étant contigus à l'unité électronique (4).

7. Ensemble selon la revendication 6, **caractérisé en ce que** les canaux de refroidissement (22) présentent au niveau des modules électroniques, représentant des éléments de puissance, la surface d'échange de chaleur la plus importante.

8. Ensemble selon une des revendications 6 ou 7, **caractérisé en ce que** les canaux de refroidissement (22) sont conçus de façon ouverte par rapport à une plaque de base (25) de l'unité électronique (4) sur laquelle sont disposés les modules électroniques.

9. Ensemble selon la revendication 8, **caractérisé en ce que** les canaux de refroidissement (22) dans l'unité hydraulique (3) sont conçus comme labyrinthe, sachant que le liquide de refroidissement - venant du dispositif de refroidissement de la boîte de vitesses - entre dans l'unité hydraulique (3) à travers les orifices d'amenée (26) au niveau des modulateurs de pression (19), qu'il se déverse sur la plaque de base (25) et qu'il est dévié à travers les orifices d'évacuation (27) dans le bac à huile.

10. Ensemble selon une des revendications 1 à 9, **caractérisé en ce que** le capteur de position (29) lié à l'unité électronique (4) à travers des lignes électriques (28) est disposé - par rapport au tiroir de sélection (30) guidé linéairement - de façon à ce qu'il enregistre directement la course de déplacement du tiroir en sens longitudinal de l'unité électronique (4) et du deuxième demi-carter (5B) du carter de soupapes (5).

11. Ensemble selon la revendication 10, **caractérisé en ce que** le capteur de position (29) est conçu comme capteur à effet Hall.
